# EUROPÄISCHE PATENTANMELDUNG

(11) **EP 1 849 676 A2**
(43) Veröffentlichungstag der Anmeldung: **31.10.2007**
(21) Anmeldenummer: 07005329.3
(22) Anmeldetag: 15.03.2007
(51) Int. Cl.: B61C 5/00, B61C 7/04, B61C 9/08

(54) **Modular Antrieb für Schienenfahrzeuge mit Verbrennungsmotorantrieb**

(30) Priorität: 26.04.2006 DE 102006019990
(71) Anmelder: Deutsche Bahn AG, 10785 Berlin (DE)
(72) Erfinder: Müller, Claus, 82515 Wolfratshausen (DE)
(74) Vertreter: Zinken-Sommer, Rainer

(57) **Zusammenfassung**

Die Erfindung betrifft eine Vorrichtung zur Motorisierung eines Schienenfahrzeuges mit Verbrennungsmotorantrieb. Hierbei weist das Schienenfahrzeug (10) eine oder mehrere angetriebene Achsen oder ein oder mehrere angetriebene Räder (14) auf. Ein derartiges Schienenfahrzeug ist insbesondere aus einem oder mehreren Einzelfahrzeugen zusammengestellt.

Erfindungsgemäß kommen anstatt bisher eines einzelnen, leistungsstarken Motors mehrere Motoren (11,12) insbesondere solche mit hoher Leistungsdichte zur Anwendung. Die Summation (13) der Leistungen erfolgt nachfolgend entweder mechanisch, hydraulisch, elektrisch oder durch unabhängigen Antrieb verschiedener Antriebsachsen oder Antriebsräder.

Besonders vorteilhaft ist, dass durch die erfindungsgemäße Zusammenschaltung und Betriebsführung der Motoren diese nicht mit hohen Teillast- und Leerlaufanteilen betrieben werden müssen. Damit ist eine erhebliche Reduzierung des Energieverbrauches und der Abgasemissionen verbunden, da ein Betrieb der Motoren in unwirtschaftlichen Betriebspunkten mit hohem spezifischem Verbrauch vermieden wird. Ein weiterer wirtschaftlicher Vorteil erwächst aus der Tatsache, das die für die Motorlebensdauer maßgebenden Betriebsstunden pro Fahrzeugkilometer deutlich reduziert werden können.

## Beschreibung

Die Erfindung betrifft eine Vorrichtung zur Motorisierung eines Schienenfahrzeuges mit Verbrennungsmotorantrieb. Hierbei weist das Schienenfahrzeug eine oder mehrere angetriebene Achsen oder ein oder mehrere angetriebene Räder auf. Ein derartiges Schienenfahrzeug ist insbesondere aus einem oder mehreren Einzelfahrzeugen zusammengestellt.

Ein bekanntes Konzept für Schienenfahrzeuge des Standes der Technik ist insbesondere der Hybridantrieb. Dieser beinhaltet jedoch meist alternativ rein elektrischen oder verbrennungsmotorischen Betrieb gegebenenfalls in Verbindung mit einem Energiespeicher.

So ist aus DE10305770 ein modular aufgebautes Antriebssystem für Schienenfahrzeuge bekannt, bei dem mehrere Antriebskomponenten auf dem Dach des Schienenfahrzeugs angeordnet sind und jeweils den gleichen Bauraum einnehmen. Alle Antriebskomponenten verfügen über einen elektrischen Anschluss, über den sie die erzeugte Energie elektrisch nach außen abgeben und über gleichartige Schnittstellen, mit denen die Antriebskomponenten miteinander verbunden sind und die elektrischen Fahrmotoren des Schienenfahrzeugs mit elektrischer Energie versorgen.

Aus EP1238881 ist ein angetriebenes Schienenfahrzeug bakannt, bei dem ein elektrischer Fahrmotor entweder durch ein stationäres elektrisches Leitungsnetz oder einem mit einer Verbrennungskraftmaschine verbundenen Generator mit elektrischer Energie versorgt wird.

Auch aus JP2004312953 und FR2814988 ist ein Hybridfahrzeug bekannt, bei dem aus einer Vielzahl möglicher Energielieferanten der jeweils erforderliche Energielieferant ausgewählt wird. Dies kann alternativ eine Oberleitung oder ein Diesel motor sein, wobei je nach Erfordernis entweder die Oberleitung oder der Dieselmotor die Energie für den Antrieb des Fahrzeuges liefert.

Aus EP1186497 ist ebenfalls ein Hybridfahrzeug bekannt. Bei diesem Fahrzeug werden mehrere Energieversorgungsmodule, wie Verbrennungsmotor-Modul, Oberleitungs-Energieversorgungsmodul oder innovativer Energieversorgungsmodul, wie z.B. Brennstoffzellen-Modul, vorgehalten, um je nach Erfordernis eines dieser Module auszuwählen und zur Energieversorgung des Antriebssystems des Fahrzeugs zu verwenden.

Bisher existiert auf dem Markt jedoch lediglich ein unbefriedigendes Angebot an für den Einsatz in Schienenfahrzeugen tauglichen Dieselmotoren, welche die derzeitigen und zukünftigen Emissionsgrenzwerte nach Richtlinie 97/68/EG erfüllen. Des Weiteren besteht das wirtschaftliche Erfordernis, den Kraftstoffverbrauch im Hinblick auf steigende Kraftstoffpreise zu reduzieren.

Weiterhin besteht der Nachteil, dass die Aus- bzw. Nachrüstung von dieselbetriebenen Schienenfahrzeugen mit Dieselpartikelfiltern wirtschaftlich nicht darstellbar ist.

Der Markt für Schienenpersonennahverkehrsleistungen verlangt zunehmend nach besonders spurtstarken Fahrzeugen. Dies bedingt zum einen leichte Fahrzeugkonstruktionen und leistungsfähige Antriebsanlagen. Deren hohe Masse läuft dem Ziel nach einer Verringerung der Fahrzeugmasse zuwieder.

Für die Anwendung in Verbrennungstriebwagen steht für Motorleistungen oberhalb 400kW lediglich die hydraulische und die elektrische Leistungsübertragung zur Verfügung. Diese weisen gegenüber mechanischen Getrieben Nachteile bei den Beschaffungskosten, dem Wirkungsgrad sowie der Masse auf.

Insbesondere der Einsatz in dieselgetriebenen Nahverkehrstriebwagen bringt für den Verbrennungsmotor eine vergleichsweise niedrige Ausnutzung der installierten Leistung mit sich. Die Zeitanteile des Motorbetriebs im Leerlauf und in Teillast dominieren das Lastprofil. Durch den in diesen Betriebspunkten mäßigen Wirkungsgrad ergibt sich ein bezogen auf die Beförderungsleistung relativ hoher Kraftstoffverbrauch.

Da Verbrennungsmotoren in der Regel nicht die volle Fahrzeuglebensdauer erreichen und zudem im Laufe der Fahrzeuglebensdauer Verbrennungsmotoren mit verbesserten Eigenschaften auf dem Markt verfügbar werden, ist eine leichte Austauschbarkeit unterschiedlicher Antriebsanlagen bezüglich des Fahrzeuges wünschenswert.

Es ist somit Aufgabe der Erfindung, eine Vorrichtung bereitzustellen, mit der ein kostengünstiger und wirtschaftlicher Antrieb von Schienenfahrzeugen mit Verbrennungsantrieb gewährleistet wird.

Diese Aufgabe wird in Verbindung mit dem Oberbegriff des Anspruches 1 erfindungsgemäß durch die in Anspruch 1 angegebenen Merkmale gelöst.

Erfindungsgemäß kommen anstatt bisher eines einzelnen, leistungsstarken Motors mehrere Motoren insbesondere solche mit hoher Leistungsdichte zur Anwendung. Die Summation der Leistungen erfolgt nachfolgend entweder mechanisch, hydraulisch, elektrisch oder durch unabhängigen Antrieb verschiedener Antriebsachsen oder Antriebsräder.

Besonders vorteilhaft ist, dass durch die erfindungsgemäße Zusammenschaltung und Betriebsführung der Motoren diese nicht mit hohen Teillast- und Leerlaufanteilen betrieben werden müssen. Damit ist eine erhebliche Reduzierung des Energieverbrauches und der Abgasemissionen verbunden, da ein Betrieb der Motoren in unwirtschaftlichen Betriebspunkten mit hohem spezifischem Verbrauch vermieden wird. Ein weiterer wirtschaftlicher Vorteil erwächst aus der Tatsache, dass die für die Motorlebensdauer maßgebenden Betriebsstunden pro Fahrzeugkilometer deutlich reduziert werden können.

Ansprüche 2 bis 18 beinhalten vorteilhafte Ausführungsformen der erfindungsgemäßen Lösung aus Anspruch 1.

Nach Anspruch 2 erfolgt die Leistungsübertragung zwischen Verbrennungsmotor und angetriebener Achse durch ein mechanisches Getriebe (Kennungswandler). Dies hat gegenüber der elektrischen und hydraulischen Leistungsübertragung den Vorteil eines höheren Wirkungsgrades. Hierbei kommen insbesondere Stufenautomatgetriebe mit hydraulischem Wandler als Anfahrelement oder Doppelkupplungsgetriebe mit nass oder trocken laufenden Lamellenkupplungen, wie sie üblicherweise im Straßenfahrzeugbau eingesetzt werden, zur Anwendung.

Nach Anspruch 3 erfolgt die Leistungsübertragung elektrisch. Die elektrische Leistungsübertragung eröffnet in Verbindung mit einem elektrischen Energiespeicher die Möglichkeit der Rekuperation der beim Bremsen anfallenden Energie. Die gespeicherte elektrische Energie kann für den folgenden Anfahrvorgang und zur Versorgung des Bordnetzes herangezogen werden.

Dies hat den Vorteil, dass neben der Reduktion des Energieverbrauches abhängig von den zugrundezulegenden Fahrspielen des Schienenfahrzeuges der verbrennungsmotorische Antrieb mit einer geringeren Leistung dimensioniert werden kann.

Nach Anspruch 4 kann die Leistungsübertragung elektrisch oder hydraulisch leistungsverzweigt erfolgen. Hierbei wird ein Teil der verbrennungsmotorisch erzeugten Leistung mit einem hohen Wirkungsgrad mechanisch übertragen. Die verbleibende Leistung wird elektrisch oder hydraulisch übertragen.

Dies hat den Vorteil, dass der gesamte Übertragungswirkungsgrad gegenüber einer rein elektrischen oder hydraulischen Leistungsübertragung höher ist, trotzdem eine in der Regel stufenlose Übersetzungseinstellung möglich ist und im elektrischen Fall durch das Vorhandensein von Elektromaschinen im Leistungsfluss zumindest ein Teil der Bremsenergie zusammen mit einem elektrischen Energiespeicher rekuperiert werden kann.

Nach Anspruch 5 werden die Motoren je nach Leistungsbedarf an Betriebspunkten mit dem jeweils minimal möglichen spezifischen Verbrauch betrieben. Das bedeutet, dass insbesondere Betriebspunkte mit hohen Drehzahlen und geringer Last und Leerlauf vermieden werden. Durch eine geeignete Ansteuerung der Motoren und der leistungsübertragenden Bauelemente wird somit vorteilhaft ein minimaler Kraftstoffverbrauch für den Fahrzeugbetrieb sichergestellt.

Dies hat den Vorteil, dass der Kraftstoffverbrauch der Antriebsanlage bezogen auf die zu erbringende Betriebsleistung des Fahrzeuges reduziert wird.

Dem Erfordernis der Kraftstoffeinsparung folgend, werden nach Anspruch 6 nicht benötigte Motoren abgeschaltet. Nach Anspruch 7 erfolgt diese Abschaltung mittels Start-Stopp-Automatik. Nach Anspruch 8 wird der Verbrennungsmotor durch die Start-Stopp-Automatik abgeschaltet, wenn seine Leistung für den Vortrieb und/oder zur Energieerzeugung nicht erforderlich ist.

Die Start-Stopp-Automatik stellt ohne Eingriff des Bedienpersonals sicher, dass nur so viele Verbrennungsmotoren im Fahrzeug oder ggf. im Zugverband laufen, wie zum jeweiligen Betrachtungszeitpunkt zur Deckung des Leistungsbedarfes für Traktion und Bordnetz benötigt werden. Dies hat den Vorteil, dass neben der Vermeidung unwirtschaftlicher Leerlaufbetriebszustände und der damit verbundenen Reduzierung des Kraftstoffverbrauches, der Abgas- und Schallemissionen ebenfalls die mittlere Betriebsdauer der Motoren bezogen auf die durch das Fahrzeug zurückgelegte Strecke reduziert wird. Es wird somit eine Verlängerung der fahrstreckenbezogenen Überholungsintervalle der Verbrennungsmotoren erreicht. Eine gleichmäßige Ausnutzung der in einem Fahrzeug installierten Verbrennungsmotoren wird durch eine Vorrichtung gemäß Anspruch 10 sichergestellt.

Nach Anspruch 9 ist je Verbrennungsmotor eine einzelne elektrische Maschine zum Starten des Verbrennungsmotors und zur Erzeugung elektrischer Energie für das Bordnetz oder je nach Konfiguration auch für Traktionszwecke des Fahrzeuges verwendbar. Bei dieselelektrischen Schienenfahrzeugantrieben kommen regelmäßig Synchrongeneratoren mit Brückengleichrichtern zum Einsatz. Diese erlauben keine von der elektrischen Last unabhängige Einstellung des Betriebspunktes des Verbrennungsmotors. Als günstig eingeschätzt wird dagegen eine Einstellung des Betriebspunktes durch einen drehzahlgeregelten Betrieb der elektrischen Maschine und einen drehmoment- bzw. füllungsgeregelten Betrieb des Verbrennungsmotors. Dafür ist ein Zweiquadrantenbetrieb der elektrischen Maschine und somit zum Beispiel ein Pulswechselrichter als Ansteuereinrichtung erforderlich. Durch die dadurch geschaffene Voraussetzung, den Verbrennungsmotor mittels der Generatormaschine anzutreiben, kann eine gegebenenfalls vorhandene weitere elektrische Maschine, welche lediglich zum Anlassen des Verbrennungsmotors benötigt würde, gemäß Anspruch 9 vorteilhaft entfallen.

Nach Anspruch 10 wird durch eine geeignete Steuer- oder Regeleinrichtung sichergestellt, dass die von den installierten Verbrennungsmotoren zu erbringenden Betriebsleistungen sich im zeitlichen Mittel gleichmäßig oder nach einem festzulegenden Betriebsregime auf die installierten Motoren aufteilen. Die Betriebsleistung wird hierbei insbesondere in den Einheiten Betriebsstunden (h) oder abgegebene Energie (kWh) angegeben. Für den Betreiber können sich wirtschaftliche Vorteile aus einer Vergleichmäßigung des Anwachsens der Betriebsstunden oder der abgegebenen mechanischen Energie der auf einem Fahrzeug eingesetzten Verbrennungsmotoren und somit des Verschleißfortschrittes im Sinne einer optimierten Planung der Überholung oder Ersatzbeschaffung der Verbrennungsmotoren ergeben. Gleiches kann ebenfalls für eine spezielle und damit nicht gleichmäßige Aufteilung der Betriebsleistungen gelten. Die Erzielung der genannten Vorteile soll gemäß Anspruch 10 vorteilhaft durch eine entsprechende Steuerung, welche zum Beispiel als Teil der Steuerungssoftware eines übergeordneten elektronischen Steuer- und Regelsystems realisiert sein kann, sichergestellt werden.

Nach Anspruch 11 wird ein abgeschalteter Motor durch Abwärme eines laufenden Motors warm gehalten. Dies kann zum Beispiel durch einen gemeinsamen Kühlkreislauf erfolgen. Bei gleichzeitigem Betrieb der Motoren könnte ein paralleler gemeinsamer Kühlmittelvorlauf vorgesehen werden, der nach Abschaltung eines Motors durch eine geeignete Regelvorrichtung in eine sequentielle Durchströmung zunächst des laufenden und danach des abgestellten Motors umgeschaltet wird.

Dies hat den Vorteil, dass ein abgeschalteter Motor jederzeit betriebsfähig ist und ein in der Regel mit hohem Verschleiß verbundenes Anlaufen aus einem kalten Zustand vermieden wird. Die Lebensdauer der Motoren soll durch diese Maßnahme verlängert werden.

Um in vorhandenen Einbauräumen zum Beispiel zwei statt bisher einen Motor verbauen zu können, werden nach Anspruch 12 bis 14 Motoren der Automobilindustrie mit hohen Leistungsdichten eingesetzt. Da diese Motoren ihre Leistung in der Regel bei höheren Drehzahlen abgeben, können sie kleiner und leichter gebaut werden. Dieser relative Massenvorteil kann bei Dieseltriebzügen häufig benötige Massespielräume für weitere Einbauten eröffnen. Alternativ verbessert sich durch die verringerte Fahrzeugmasse das Beschleunigungsverhalten und der Kraftstoffverbrauch des Fahrzeuges. Ein weiterer Vorteil erwächst durch die vergleichsweise kostengünstige Verfügbarkeit von Partikelfiltern für Verbrennungsmotoren aus dem Kraftfahrzeugbereich. Diese Motoren emittieren zudem in der Regel deutlich weniger Lärm und Vibrationen als die üblicherweise im Schienenfahrzeugbau eingesetzten Motoren, wodurch der Komfort der zu befördernden Fahrgäste gesteigert und zudem die Lärmbelastung von Anliegern reduziert werden kann.

Dem Gedanken der Standardisierung und Modularisierung soll insbesondere dadurch Rechnung getragen werden, dass nach Anspruch 15 und 16 die zu verwendenden Motoren wahlweise mit Getriebe oder elektrischem Generator in einheitlichen Antriebsmodulen mit standardisierten Schnittstellen zum Fahrzeug eingebaut werden. Diese Antriebsmodule können zum Beispiel aus einem Tragrahmen für Motor und wahlweise mechanischem Kennungswandler oder elektrischem Generator sowie Hilfsaggregate bestehen, welche mit leicht zu montierenden Kupplungen für Steuerung, Kraftstoff, Kühlmedien, Ansaugluft, Abgas und mechanische oder elektrische Leistung ausgerüstet ist, um eine einfache Tauschbarkeit des Antriebsmoduls bezüglich des Fahrzeuges zu gewährleisten. Diese Lösung bietet den zusätzlichen Vorteil, dass ohne fahrzeugseitige Änderungen Verbrennungsmotoren und Kennungswandler welche sich in Typ, Bauart, Motorgeneration, Zylinderanzahl, Leistung und Hersteller unterscheiden, zum Einsatz kommen können. Die Peripherie des Antriebsmoduls übernimmt dafür die Abstrahierung des enthaltenen Aggregates bezüglich des Fahrzeuges.

Eine Variante der kombinierten verbrennungsmotorischen und elektrischen Antriebsform ist nach Anspruch 17 die Möglichkeit, oben beschriebene Antriebsmodule anstatt mit Verbrennungsmotoren mit einem Elektromotor und zugehöriger Leistungselektronik und gegebenenfalls zusätzlich einem elektrischen Energiespeicher auszurüsten. Die Leistungsflüsse im Fahrzeug lassen sich durch eine derartige Anordnung unter gewissen Randbedingungen sowohl zur Rekuperation von Bremsenergie als auch zur Versorgung des elektrischen Bordnetzes heranziehen. Als elektrische Energiespeicher werden insbesondere Doppelschichtkondensatoren oder Lithium-lonen-Akkumukatoren verwendet.

Anspruch 18 beschreibt die Zusammenführung der mechanischen Leistungen mittels eines Summiergetriebes, welches als zum Beispiel als Stirnradstufe oder Planetensatz ausgebildet sein kann. Derartige Summiergetriebe sind insbesondere von Bedeutung, falls bestehende Antriebsanlagen mit Verbrennungsmotoren durch neue entsprechend dem erfindungsgemäßen modularen Konzept ersetzt werden sollen. Vorteilhaft ist, dass die Schnittstelle zu einer in der Regel vorhandenen Gelenkwelle auf diese Weise gleich gehalten werden kann.

Die Erfindung wird nachstehend anhand von zwei Ausführungsbeispielen und einer Zeichnung mit zwei Figuren näher erläutert. Die Figuren zeigen in
- **Fig. 1**: schematisch ein Schienenfahrzeug mit einem Verbrennungsmotor
- **Fig. 2**: schematisch ein Schienenfahrzeug mit zwei Verbrennungsmotoren

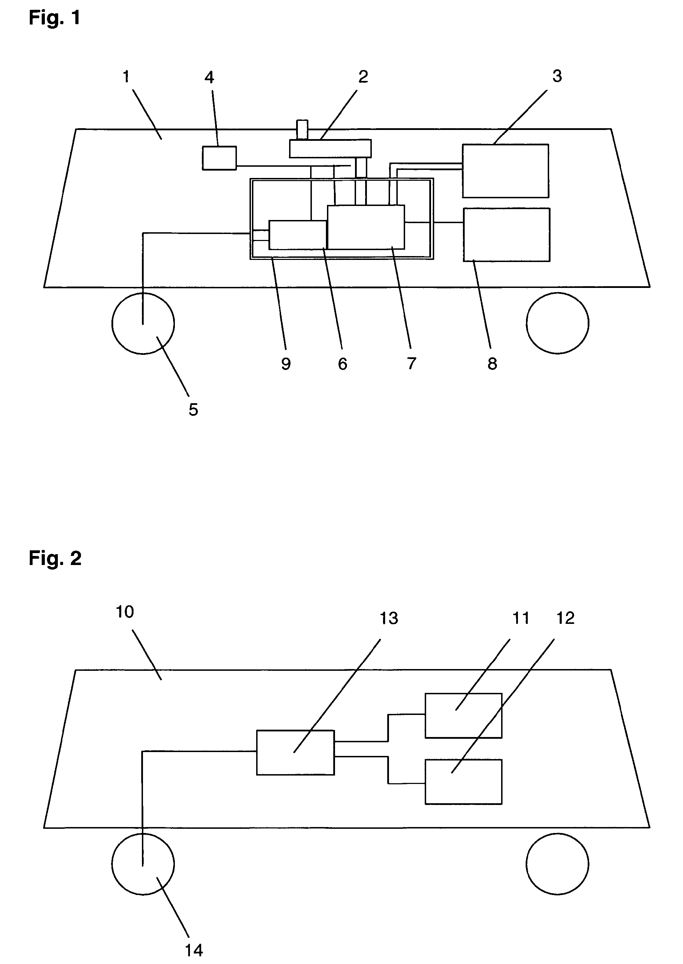

Ein erstes besonders vorteilhaftes Ausführungsbeispiel betrifft gemäß **Fig. 1** ein Schienenfahrzeug 1 mit verbrennungsmotorischem Antrieb und den die Antriebsanlage betreffenden Komponenten Abgasanlage 2, Kühlanlage 3, Fahrzeug- bzw. Antriebssteuerung 4, angetriebenes Rad bzw. angetriebener Radsatz, Getriebe oder elektrischer Generator 6, Verbrennungsmotor 7 und Kraftstoffbehälter 8. Generator 6 und Verbrennungsmotor 7 sind in einem standardisierten und leicht zu tauschenden Antriebsmodul 9 mit einheitlichen Schnittstellen zum Fahrzeug integriert.

Im zweiten Ausführungsbeispiel gemäß **Fig. 2** weist ein Schienenfahrzeug 10 zwei Verbrennungsmotoren 11 und 12 auf. Beide Verbrennungsmotoren 11 und 12 sind über einen Leistungssummierer 13 miteinander verbunden, der die Energie beider Motoren aufsummiert. So wird insbesondere bei zwei gleichartigen Verbrennungsmotoren, die im gleichen Drehmomentbereich betrieben werden, durch den Leistungssummieren 13 die bezogen auf einen einzelnen Motor doppelte Energie ausgegeben.

Diese Energie wird daraufhin dem Antriebsmodul eines angetriebenen Rades 14 des Schienenfahrzeugs 10 oder mehreren Rädern bzw. Radsätzen zur Verfügung gestellt.

Im Teillastbetrieb, z.B. beim Ausrollen kurz vor einem Halt am Bahnsteig oder beim antriebsarmen Rollen abwärts eines Gefälles, kann z.B. Motor 11 abgeschaltet werden und allein Motor 12 den reduzierten Energiebedarf des Schienenfahrzeuges decken.

### Bezugszeichenliste

- 1: Schienenfahrzeug
- 2: Abgasanlage
- 3: Kühlanlage
- 4: Fahrzeugsteuerung
- 5: Angetriebenes Rad
- 6: Getriebe oder Generator
- 7: Verbrennungsmotor
- 8: Kraftstoffanlage
- 9: Abgrenzung des Antriebsmoduls mit Schnittstellen

- 10: Schienenfahrzeug
- 11: Verbrennungsmotor
- 12: Verbrennungsmotor
- 13: Leistungssummierer
- 14: angetriebenes Rad

## Patentansprüche

1. Vorrichtung zur Motorisierung eines Schienenfahrzeuges mit Verbrennungsmotorantrieb, wobei das Schienenfahrzeug mindestens eine angetriebene Achse oder mindestens ein angetriebenes Rad aufweist, **dadurch gekennzeichnet, dass** mindestens zwei Verbrennungsmotoren in dem Schienenfahrzeug angeordnet sind, die ihre abgegebene Leistung wahlweise mechanisch und/oder elektrisch und/oder hydraulisch summiert oder leistungsverzweigt an die mindestens eine angetriebene Achse oder das mindestens eine angetriebene Rad oder unabhängig voneinander an mindestens zwei angetriebene Achsen oder zwei angetriebene Räder abgeben.[C1]

2. Vorrichtung zur Motorisierung eines Schienenfahrzeuges mit Verbrennungsmotorantrieb nach Anspruch 1, **dadurch gekennzeichnet, dass** die Leistungsübertragung zwischen den Verbrennungsmotoren und der mindestens einen angetriebenen Achse oder dem mindestens einen angetriebenen Rad über automatisch lastschaltbare Stufengetriebe mit Anfahrelement erfolgt.

3. Vorrichtung zur Motorisierung eines Schienenfahrzeuges mit Verbrennungsmotorantrieb nach Anspruch 1, **dadurch gekennzeichnet, dass** die Leistungsübertragung zwischen den Verbrennungsmotoren und der mindestens einen angetriebenen Achse oder dem mindestens einen angetriebenen Rad elektrisch erfolgt und die mindestens einen angetriebenen Achse oder dem mindestens einen angetriebenen Rad durch mindestens einen Elektromotor angetrieben sind.

4. Vorrichtung zur Motorisierung eines Schienenfahrzeuges mit Verbrennungsmotorantrieb nach Anspruch 1, **dadurch gekennzeichnet, dass** die Leistungsübertragung zwischen den Verbrennungsmotoren und der mindestens einen angetriebenen Achse oder dem mindestens einen angetriebenen Rad elektrisch oder hydraulisch leistungsverzweigt erfolgt.

5. Vorrichtung zur Motorisierung eines Schienenfahrzeuges mit Verbrennungsmotorantrieb nach mindestens einem der Ansprüche 1 bis 4, **dadurch gekennzeichnet, dass** die Motoren je nach Leistungsbedarf an Betriebspunkten mit dem geringstmöglichen spezifischen Verbrauch betrieben werden.

6. Vorrichtung zur Motorisierung eines Schienenfahrzeuges mit Verbrennungsmotorantrieb nach mindestens einem der Ansprüche 1 bis 5, **dadurch gekennzeichnet, dass** nicht benötigte Motoren abgeschaltet sind.

7. Vorrichtung zur Motorisierung eines Schienenfahrzeuges mit Verbrennungsmotorantrieb nach Anspruch 6, **dadurch gekennzeichnet, dass** mindestens ein Verbrennungsmotor mit einer Start-Stopp-Automatik betrieben wird.

8. Vorrichtung zur Motorisierung eines Schienenfahrzeuges mit Verbrennungsmotorantrieb nach Anspruch 7, **dadurch gekennzeichnet, dass** der Verbrennungsmotor durch die Start-Stopp-Automatik abgeschaltet wird, wenn seine Leistung für den Vortrieb und/oder zur Energieerzeugung nicht erforderlich ist.

9. Vorrichtung zur Motorisierung eines Schienenfahrzeuges mit Verbrennungsmotorantrieb nach mindestens einem der Ansprüche 1 bis 8, **dadurch gekennzeichnet, dass** je Verbrennungsmotor eine einzelne elektrische Maschine zum Starten des Verbrennungsmotors und zur Erzeugung elektrischer Energie für das Bordnetz oder je nach Konfiguration auch für Traktionszwecke des Fahrzeuges verwendbar ist.

10. Vorrichtung zur Motorisierung eines Schienenfahrzeuges mit Verbrennungsmotorantrieb nach mindestens einem der Ansprüche 1 bis 9, **dadurch gekennzeichnet, dass** durch eine geeignete Steuer- oder Regeleinrichtung sichergestellt wird, dass die von den installierten Verbrennungsmotoren zu erbringenden Betriebsleistungen sich im zeitlichen Mittel gleichmäßig oder nach einem festzulegendem Betriebsregime auf die installierten Motoren aufteilen.

11. Vorrichtung zur Motorisierung eines Schienenfahrzeuges mit Verbrennungsmotorantrieb nach mindestens einem der Ansprüche 6 bis 10, **dadurch gekennzeichnet, dass** die Abwärme des laufenden Motors oder der laufenden Motoren zum Warmhalten des abgeschalteten Motors bzw. der abgeschalteten Motoren heranziehbar ist.

12. Vorrichtung zur Motorisierung eines Schienenfahrzeuges mit Verbrennungsmotorantrieb nach mindestens einem der Ansprüche 1 bis 11, **dadurch gekennzeichnet, dass** die Motoren Motoren aus dem Großserienbau sind.

13. Vorrichtung zur Motorisierung eines Schienenfahrzeuges mit Verbrennungsmotorantrieb nach Anspruch 12, **dadurch gekennzeichnet, dass** die Motoren Motoren der Automobilindustrie sind.

14. Vorrichtung zur Motorisierung eines Schienenfahrzeuges mit Verbrennungsmotorantrieb nach Anspruch 12, **dadurch gekennzeichnet, dass** die Motoren eine Leistungsdichte über 50kW pro Liter Hubraum aufweisen.

15. Vorrichtung zur Motorisierung eines Schienenfahrzeuges mit Verbrennungsmotorantrieb nach mindestens einem der Ansprüche 1 bis 14, **dadurch gekennzeichnet, dass** die installierten Verbrennungsmotoren jeweils einzeln oder in Kombination mit einem lastschaltbaren Stufengetriebe oder elektrischem Generator in leicht tauschbaren Antriebsmodulen mit einheitlichen und standardisierten fahrzeugseitigen Schnittstellen installiert sind.

16. Vorrichtung zur Motorisierung eines Schienenfahrzeuges mit Verbrennungsmotorantrieb nach Anspruch 15, **dadurch gekennzeichnet, dass** die in einem Fahrzeug zur Anwendung kommenden Antriebsmodule mit Verbrennungsmotoren unterschiedlicher Bauart und Leistung bestückt sein können.

17. Vorrichtung zur Motorisierung eines Schienenfahrzeuges mit Verbrennungsmotorantrieb nach Anspruch 15, **dadurch gekennzeichnet, dass** mindestens ein Antriebsmodul statt mit einem Verbrennungsmotor mit einem Elektromotor und wahlweise zusätzlich mit benötigter Leistungselektronik bzw. einem elektrischen Energiespeicher ausgerüstet ist.

18. Vorrichtung zur Motorisierung eines Schienenfahrzeuges mit Verbrennungsmotorantrieb nach mindesten einem der Ansprüche 1 bis 17, **dadurch gekennzeichnet, dass** die mechanische Summierung der ausgegebenen Leistung durch ein Summiergetriebe mit oder ohne Wendeschalteinrichtung zur Drehrichtungsumkehr erfolgt
